# EUROPEAN PATENT APPLICATION

(11) **EP 1 918 098 A2**
(43) Date of publication of application: **07.05.2008**
(21) Application number: 07020052.2
(22) Date of filing: 12.10.2007
(51) Int. Cl.: B41F 13/42, B41F 33/00, B41F 33/14, B65H 43/08

(54) **Rotary body protecting apparatus**

(30) Priority: 26.10.2006 JP 2006291245
(71) Applicant: Komori Corporation, Sumida-ku Tokyo (JP)
(72) Inventor: Sugiyama, Hiroyuki, Tokyo (JP); Ono, Katsuhiko, Tokyo (JP)
(74) Representative: Samson & Partner

(57) **Abstract**

A rotary body protecting apparatus includes first and second rotary bodies, a cover, a cover detection unit, an optical detector, and a control device. The second rotary body is arranged in the same axial direction as that of the first rotary body and rotates while opposing the first rotary body. The cover opens/closes an opposing position of the first second rotary bodies. The cover detection unit detects a closed state of the cover. The optical detector is close to the opposing position of the first and second rotary bodies and arranged in the vicinity of the ends of the first and second rotary bodies. The optical detector includes a light-projecting portion which projects light in the axial directions of the first and second rotary bodies, and a light-receiving portion which receives the light from the light-projecting portion. The control device stops rotation of the first and second rotary bodies when the optical detector detects that the light-receiving portion does not receive the light from the light-projecting portion.
The control device performs one of control of disabling the optical detector and control of invalidating a detection output of the optical detector when the cover detection means detects the closed state of the cover.

## Description

### Background of the Invention

The present invention relates to a rotary body protecting apparatus in a printing press, coating apparatus, or the like, in which a safety device is provided close to the opposing position of two rotary bodies.

In general, an apparatus of this type comprises a safety device which detects a foreign substance, e.g., a rag to clean rotary bodies or a maintenance tool, and stops the rotary bodies so the foreign substance will not be erroneously inserted between the rotary bodies. As shown in Japanese Patent Laid-Open No. 2001-171087, a conventional rotary body protecting apparatus comprises an openable cover, a safety bar which extends at a position close to the opposing portion of a coater cylinder and impression cylinder in the axial directions of the two cylinders and has pivotally supported two ends, a limit switch which is actuated when the safety bar pivots, and a pair of air cylinders which support the respective ends of the safety bar by rods.

In this arrangement, when opening the cover, the rods of the air cylinders move forward to move the safety bar to the position close to the opposing position of the coater cylinder and impression cylinder. When closing the cover, the rods of the air cylinders move backward to move the safety bar to a position away from the opposing position of the coater cylinder and impression cylinder.

A maintenance space where an operator can enter must be reserved among printing units. Hence, frames in front of and behind each printing unit are arranged close to the coater cylinder and impression cylinder. If the rotary body protecting apparatus described above is arranged at the opposing position of the impression cylinder and transfer cylinder which' transfer a sheet, the safety bar cannot be moved to a position sufficiently away from the opposing position of the two cylinders. Therefore, when the trailing edge of a sheet flutters during transfer of the sheet from the impression cylinder to the transfer cylinder, it may come into contact with the safety bar to damage the sheet or the printing surface. A safety device cannot accordingly be arranged at this position.

To prevent erroneous insertion of the cleaning rag or the like between the impression cylinder and transfer cylinder, the impression cylinder is cleaned by wiggling it a large number of times. As the impression cylinder is pivoted by wiggling by manually pressing a push button, the push button must be pressed a large number of times repeatedly. Also, the operator cannot clean the impression cylinder continuously. This degrades the work efficiency and prolongs the work time.

In the conventional rotary body protecting apparatus described above, the air cylinders move the safety device between the position close to the impression cylinder and the position away from the impression cylinder. This not only increases the number of components but also complicates the structure. Paper dust or a liquid such as ink or varnish may attach to the two ends of the safety bar to disable the safety bar from pivoting smoothly. Then, even when a rag or the like comes into contact with the safety bar, it cannot be detected.

### Summary of the Invention

It is an object of the present invention to provide a rotary body protecting apparatus for which a time required to clean an impression cylinder is shortened.

It is another object of the present invention to provide a rotary body protecting apparatus in which the number of components is decreased and the structure is simplified.

It is still another object of the present invention to provide a rotary body protecting apparatus in which erroneous detection is prevented.

In order to achieve the above object, according to the present invention, there is provided a rotary body-protecting apparatus comprising a first rotary body, a second rotary body which is arranged in the same axial direction as that of the first rotary body and rotates while opposing the first rotary body, a cover which opens/closes an opposing position of the first rotary body and the second rotary body, cover detection means for detecting a closed state of the cover, an optical detector which is close to the opposing position of the first rotary body and the second rotary body and arranged in the vicinity of ends of the first rotary body and the second rotary body, the optical detector including a light-projecting portion which projects light in the axial directions of the first rotary body and the second rotary body, and a light-receiving portion which receives the light from the light-projecting portion, and a control device which stops rotation of the first rotary body and the second rotary body when the optical detector detects that the light-receiving portion does not receive the light from the light-projecting portion, wherein the control device performs one of control of disabling the optical detector and control of invalidating a detection output of the optical detector when the cover detection means detects the closed state of the cover.

### Brief Description of the Drawings

Fig. 1 is a side view of a printing unit in a sheet-fed rotary printing press according to the first embodiment of the present invention;
Fig. 2 is a perspective view showing the main part of the rotary body protecting apparatus shown in Fig. 1;
Fig. 3 is a block diagram showing the electrical arrangement of the rotary body protecting apparatus shown in Fig. 1;
Fig. 4 is a flowchart to explain the operation of the rotary body protecting apparatus shown in Figs. 2 and 3;
Fig. 5 is a side view of a printing unit in a sheet-fed rotary printing press according to the second embodiment of the present invention;
Fig. 6 is a perspective view of a rotary body protecting apparatus according to the third embodiment of the present invention; and
Fig. 7 is a block diagram showing the electrical arrangement of a rotary body protecting apparatus according to the fourth embodiment of the present invention.

### Description of the Preferred Embodiments

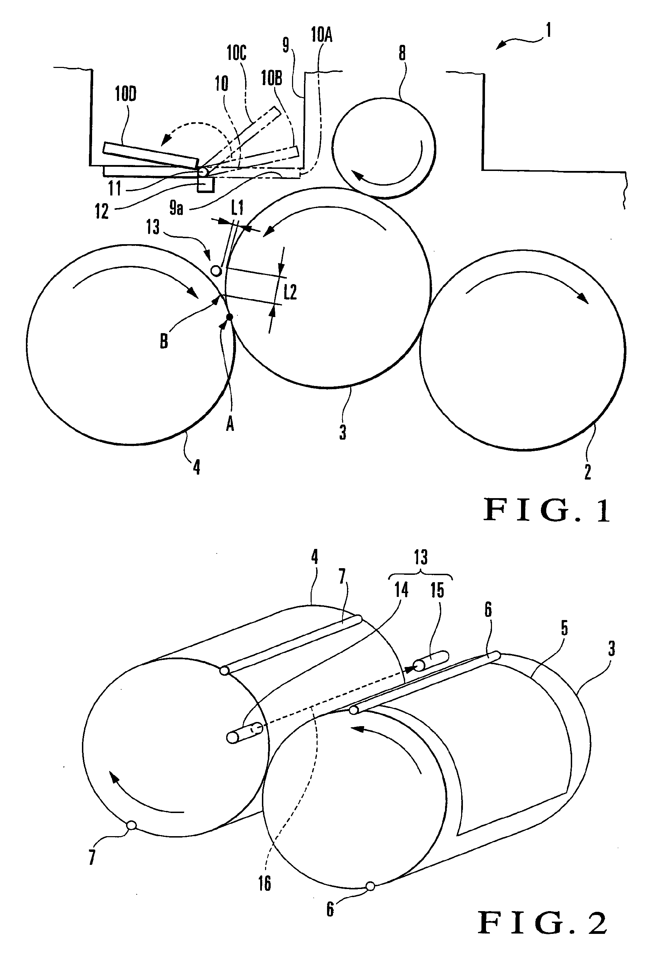

A rotary body protecting apparatus according to the first embodiment of the present invention will be described with reference to Figs. 1 to 3.

Referring to Fig. 1, a printing unit 1 in a sheet-fed rotary printing press comprises a transfer cylinder 2 located on the upstream side in the sheet convey direction, an impression cylinder 3 serving as the first rotary body which opposes the transfer cylinder 2, and a transfer cylinder 4 serving as the second rotary body which opposes the impression cylinder 3. The impression cylinder 3 has a pair of notches (not shown) in its outer surface portion at positions phase-shifted from each other by 180° in the circumferential direction, to extend in the axial direction of the impression cylinder 3. As shown in Fig. 2, a gripper unit (to be merely referred to as a gripper hereinafter) 6 which grips the leading edge of a sheet 5 is arranged in each of the pair of notches.

The transfer cylinder 4 has a pair of notches (not shown) in its outer surface portion at positions phase-shifted from each other by 180° in the circumferential direction, to extend in the axial direction of the transfer cylinder 4. A gripper unit (to be merely referred to as a gripper hereinafter) 7 which grips the leading edge of the sheet 5 is arranged in each of the pair of notches. The gripper 6 of the impression cylinder 3 grips the sheet 5 at its leading edge to convey the sheet 5. At an opposing position A where the impression cylinder 3 and transfer cylinder 4 oppose each other, the leading edge of the sheet 5 is gripping-changed by the gripper 7 of the transfer cylinder 4, and then the transfer cylinder 4 conveys the sheet 5.

A plate cylinder (not shown) opposes a blanket cylinder 8 which opposes the impression cylinder 3. The sheet 5 which is conveyed as being gripped by the gripper 6 of the impression cylinder 3 is printed when the sheet 5 passes through the opposing point (contact point) of the impression cylinder 3 and blanket cylinder 8. A frame 9 surrounding the printing unit 1 has a window 9a at a position to face the impression cylinder 3 to extend horizontally in the axial direction of the impression cylinder 3. A step 10 serving as a safety cover which covers the window 9a is supported to be pivotal between a position 10A where it keeps the window 9a closed and a position 10D where it keeps the window 9a open, about a pivot shaft 11 as a pivot center.

A limit switch 12 is provided which serves as a cover detection means for detecting that the step 10 is at the position 10A to keep the window 9a closed on the basis of the rotation angle of the pivot shaft 11. When the limit switch 12 does not detect the closed state of the window 9a, the step 10 is at a position 10B, a position 10C, or the position 10D to keep the window 9a open. In place of the limit switch 12 which detects the closed state of the window 9a, a switch which detects whether the window 9a is closed or open may be employed.

When the step 10 keeps the window 9a closed, it regulates a rag or the like from entering the opposing position A of the impression cylinder 3 and transfer cylinder 4 from outside the window 9a. When the step 10 is at the position 10B, 10C, or 10D to keep the window 9a open, it allows the rag or the like to enter the opposing position A of the impression cylinder 3 and transfer cylinder 4 from outside the window 9a. Note that each of the positions 10B and 10C indicates the position of the step 10 when the step 10 keeps the window 9a partially open.

A detector 13 comprising a light-projecting unit 14 and a light-receiving unit 15 which receives light projected by the light-projecting unit 14 through a detection optical path is provided at a position close to the opposing position A where the impression cylinder 3 and transfer cylinder 4 oppose when seen from the side. When seen from the side, the detector 13 is arranged to be spaced apart from the surface of the impression cylinder 3 by a gap L1 with which the rag or the like does not enter the space between the detection optical path (optical axis) of the light 16 from the light-projecting unit 14 and the outer surface of the impression cylinder 3.

When seen from the side, the detector 13 and the detection optical path (optical axis) of the light 16 are arranged at a position spaced apart by a distance L2 from a position B where the rag or the like is caught between the impression cylinder 3 and transfer cylinder 4. The distance L2 is set equal to or more than a length through which the impression cylinder 3 which has been rotating much slower than the low-speed rotation during printing rotates until stopping at the position B by inertia since the detector 13 detects the rag or the like and sends a rotation stop signal.

As shown in Fig. 2, when seen from the top, the light-projecting unit 14 and light-receiving unit 15 constituting the detector 13 are arranged outside the two ends of each of the impression cylinder 3 and transfer cylinder 4 in the axial direction. The positions of the light-projecting unit 14 and light-receiving unit 15 are set such that the detection optical path of the light 16 from the light-projecting unit 14 to the light-receiving unit 15 is parallel to the axial directions of the impression cylinder 3 and transfer cylinder 4.

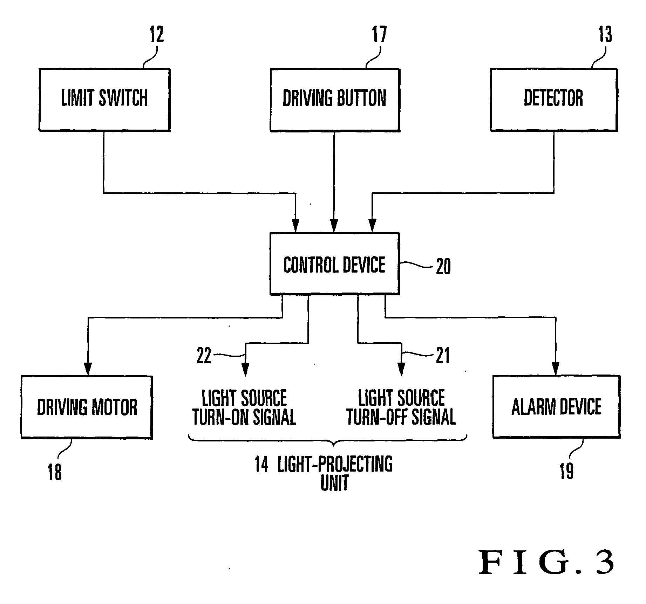

Referring to Fig. 3, a control device 20 is connected to a limit switch 12, the detector 13, a driving button 17, a driving motor 18, and an alarm device 19. The driving button 17 is a driving button for the printing press which is manipulated when starting cleaning of the impression cylinder 3. When the driving button 17 is turned on, the driving motor 18 for driving printing press is driven to slowly rotate the impression cylinder 3. The alarm device 19 produces an alarm when paper dust or a liquid such as ink or varnish attaches to the light-projecting surface of the light-projecting unit 14 or the light-receiving surface of the light-receiving unit 15 and the detector 13 does not operate normally. More specifically, the alarm device 19 produces an alarm when the light-projecting unit 14 does not sufficiently project the light 16 and the light-receiving unit 15 cannot obtain a predetermined output value, or when the light-receiving unit 15 does not accurately receive the light 16 from the light-projecting unit 14 and cannot obtain the predetermined output value.

The control device 20 outputs a signal 21 for turning off the light-projecting unit 14 (light source) of the detector 13 when the limit switch 12 detects the closed state of the window 9a. The control device 20 also outputs a signal 22 for turning on the light-projecting unit 14 (light source) of the detector 13 when the closed state of the window 9a is not detected, i.e., when the window 9a is open. After that, when the detector 13 detects a rag or the like, the control device 20 controls to stop driving the driving motor 18.

Ordinary printing operation and impression cylinder cleaning operation of the rotary body projecting apparatus having the above arrangement will be described. First, when performing ordinary printing, as the limit switch 12 has detected that the step 10 keeps the window 9a closed, the control device 20 turns off the light-projecting unit 14 (light source) of the detector 13. In this state, the sheet 5 which is conveyed as being gripped by the gripper 6 of the impression cylinder 3 is printed while it passes between the impression cylinder 3 and blanket cylinder 8. Then, at the opposing position A of the impression cylinder 3 and transfer cylinder 4, the sheet 5 is gripping-changed to the gripper 7 of the transfer cylinder 4.

Even if the trailing edge of the gripping-changed sheet 5 flutters and blocks the detection optical path between the light-projecting unit 14 and light-receiving unit 15 of the detector 13, because the light-projecting unit 14 (light source) is OFF, the detector 13 does not detect the sheet 5. Therefore, the driving motor 18 does not stop driving but ordinary printing operation continues. Hence, ordinary printing operation can be performed without moving the detector 13 in a direction to separate from the impression cylinder 3. Consequently, no moving means for moving the detector 13 is required, leading to a reduction in the number of components and a simple structure.

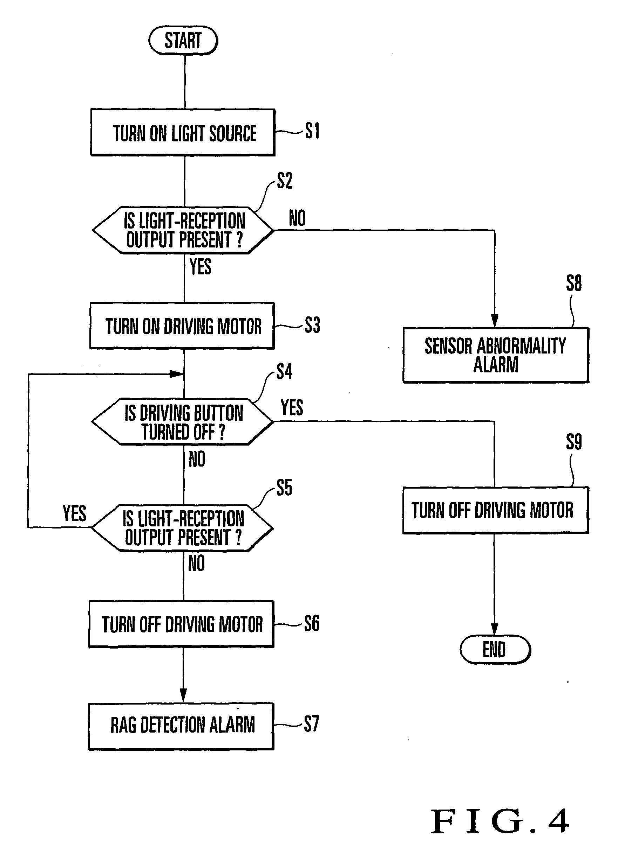

The case of cleaning the impression cylinder 3 will be described with reference to Fig. 4. In this case, the step 10 is pivoted counterclockwise in Fig. 1 about the pivot shaft 11 as the pivotal center, and passes through the positions 10B and 10C to reach the position 10D to open the window 9a. When the window 9a is open, the limit switch 12 is set in the non-detection state. Thus, the control device 20 turns off the light-projecting unit 14 (light source) of the detector 13 (step S1). Then, if a predetermined output from the light-receiving unit 15 is present (YES in step S2), upon turning on the driving button 17, the driving motor 18 is driven (step S3). This slowly rotates the impression cylinder 3. The operator can insert the rag into the frame 9 from the window 9a to clean the outer surface of the impression cylinder 3. During the cleaning operation, the control device 20 monitors the manipulation of the driving button 17 and the output from the light-receiving unit 15 (steps S4 and S5). When the driving button 17 is turned off (YES in step S4), the cleaning operation is ended.

During the cleaning operation, if the operator erroneously inserts the rag toward the opposing position A of the impression cylinder 3 and transfer cylinder 4 or drops it, the detector 13 having the detection optical path close to the opposing position A detects the rag (NO in step S5). The control device 20 thus stops driving of the driving motor 18 (step S6), and outputs an alarm indicating that the rag is detected (step S7).

As described above, the detector 13 is arranged at the position spaced apart by the distance L2 from the position B where the rag or the like is caught between the impression cylinder 3 and transfer cylinder 4. The distance L2 is set equal to the length through which the impression cylinder 3, which has been rotating slowly, rotates until stopping at the position B by inertia since the detector 13 detects the rag or the like and sends the rotation stop signal. Hence, the impression cylinder 3 stops before the rag is transported to the opposing position A of the impression cylinder 3 and transfer cylinder 4.

Thus, the rag will not damage or break the surfaces of the impression cylinder 3 and transfer cylinder 4. Since the non-contact detector 13 detects the rag, the detection optical path of the detector 13 can be set between the impression cylinder 3 and transfer cylinder 4 which transfer the sheet 5. This allows cleaning of the impression cylinder 3 during rotation, shortening the time required to clean the impression cylinder 3. Unlike in the conventional case, the detector 13 does not require a movable portion to detect the rag or the like. This can prevent erroneous detection caused by paper dust or a liquid such as ink or varnish.

When the light-projecting unit 14 (light source) is turned on, if the predetermined output cannot be immediately obtained due to the soil of the light-projecting surface of the light-projecting unit 14 or the light-receiving surface of the light-receiving unit 15, as described above (NO in step S2), the alarm device 19 outputs an alarm indicating sensor abnormality (step S8). Since this embodiment can check the abnormality of the light-projecting unit 14 or light-receiving unit 15, erroneous detection caused by sensor abnormality can be prevented.

In the first embodiment, only when the step 10 is at the position 10D, the limit switch 12 detects the step 10 and the window 9a is determined to be open. Alternatively, even when the step 10 is at the position 10B or 10C, the limit switch 12 may detect it and the window 9a may be determined to be open.

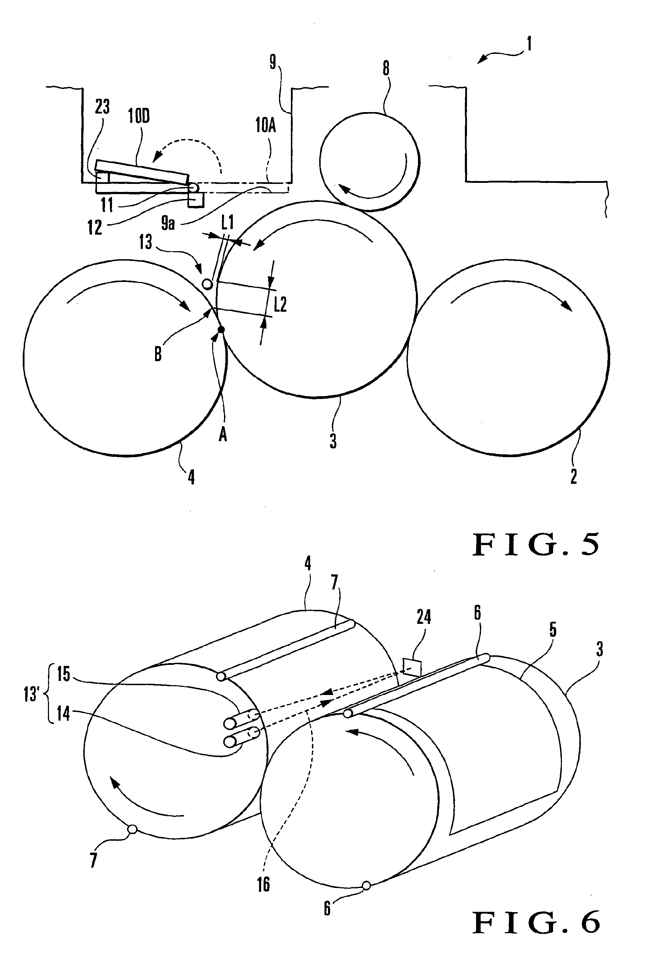

The second embodiment of the present invention will be described with reference to Fig. 5. The second embodiment is different from the first embodiment in that, as shown in Fig. 5, a limit switch 23 which directly detects a step 10 that has moved to a position 10D is provided in addition to a limit switch 12. In this arrangement, when the limit switch 23 detects the step 10, a controller turns on a light-projecting unit 14 (light source) of a detector 13.

The third embodiment of the present invention will be described with reference to Fig. 6. The third embodiment is different from the first embodiment in that, as shown in Fig. 6, a pair of a light-projecting unit 14 and light-receiving unit 15 are arranged on one end side of each of an impression cylinder 3 and transfer cylinder 4, and a reflection plate 24 is provided on the other end side of each of the impression cylinder 3 and transfer cylinder 4. Also, in this arrangement, the reflection plate 24 reflects the light projected by the light-projecting unit 14, and the light-receiving unit 15 receives the reflected light. The light-projecting unit 14, light-receiving unit 15, and reflection plate 24 constitute a reflection type detector 13'.

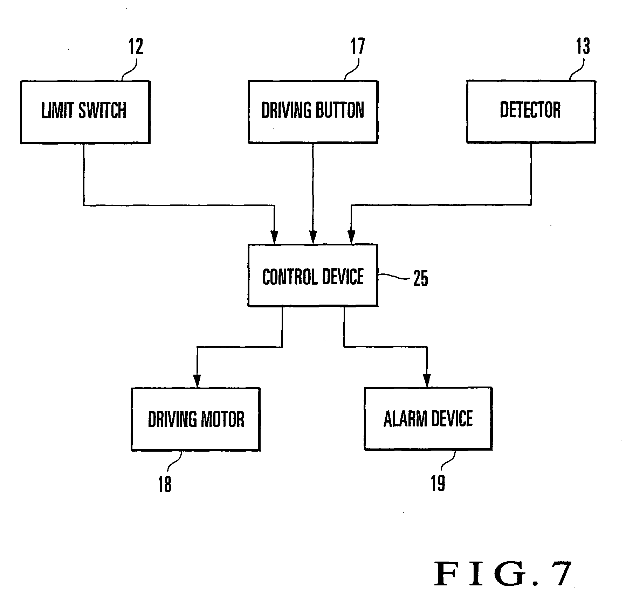

The fourth embodiment of the present invention will be described with reference to Fig. 7. The fourth embodiment is different from the first embodiment in that, as shown in Fig. 7, a light-projecting unit 14 (light source) of a detector 13 is always ON regardless of the open/closed state of a step 10. A control device 25 controls to invalidate a detection output of the detector 13 when the step 10 is at a position indicated by 10A to keep a window 9a closed. The control device 25 also controls to validate the detection output of the detector 13 when the step 10 keeps the window 9a open.

In this arrangement, when performing ordinary printing, as the step 10 keeps the window 9a closed, the control device 25 invalidates the detection output of the detector 13. Accordingly, even when the trailing edge of a sheet 5 which has been gripping-changed at a opposing position A of an impression cylinder 3 and transfer cylinder 4 flutters to block the portion between the light-projecting unit 14 and a light-receiving unit 15, the control device 25 determines that the detection operation of the detector 13 is invalid. Therefore, despite that the detector 13 has detected the sheet 5, a driving motor 18 does not stop driving, and ordinary printing operation continues.

When cleaning the impression cylinder 3, as the step 10 keeps the window 9a open, the control device 25 determines that the detection operation of the detector 13 is valid. This allows detection of the rag or the like entering the opposing position A of the impression cylinder 3 and transfer cylinder 4, and the same operation and effect as those of the first embodiment can be obtained.

In the above embodiments, the control device 20 or 25 disables the detector 13 itself or invalidates the detection output of the detector 13 when the closed state of the step 10 is detected. It suffices as far as the detector 13 is disabled to detect.

Cases have been described in which the detection optical path of the detector 13 is set at a position close to the opposing position of the impression cylinder 3 and transfer cylinder 4. Alternatively, the detection optical path may be set at a position close to the opposing position of a transfer cylinder and transfer cylinder, a position close to the opposing position of an impression cylinder and delivery cylinder, a position close to the opposing position of a blanket cylinder and impression cylinder, or a position close to the opposing position of the blanket cylinder and a plate cylinder. Alternatively, the detection optical path may be arranged at a position close to the opposing position of a coater cylinder and impression cylinder in a coating apparatus, or a position close to the opposing position of an impression cylinder and impression cylinder in a perfector in which printing units are vertically arranged.

As has been described above, according to the present invention, since a non-contact detector detects a cleaning rag or the like, the detection path can be set in the vicinity of a space between rotary bodies that transfer a sheet. This allows cleaning of the rotary bodies during rotation, shortening the time required to clean the rotary bodies.

Even during conveyance of a sheet, the detector need not be moved. Thus, no means for moving the detector is required, leading to a reduction in number of components and a simple structure. The detector does not require a movable portion to detect the rag or the like. This can prevent erroneous detection that occurs when paper dust or a liquid such as ink or varnish attaches to the movable portion.

## Claims

1. A rotary body protecting apparatus **characterized by** comprising:
a first rotary body (3);
a second rotary body (4) which is arranged in the same axial direction as that of said first rotary body and rotates while opposing said first rotary body;
a cover (10) which opens/closes an opposing position of said first rotary body and said second rotary body;
cover detection means (12) for detecting a closed state of said cover;
an optical detector (13, 13') which is close to the opposing position of said first rotary body and said second rotary body and arranged in the vicinity of ends of said first rotary body and said second rotary body, said optical detector including a light-projecting portion (14) which projects light in the axial directions of said first rotary body and said second rotary body, and a light-receiving portion (15) which receives the light from said light-projecting portion; and
a control device (20) which stops rotation of said first rotary body and said second rotary body when said optical detector detects that said light-receiving portion does not receive the light from said light-projecting portion,
wherein said control device performs one of control of disabling said optical detector and control of invalidating a detection output of said optical detector when said cover detection means detects the closed state of said cover.

2. An apparatus according to claim 1, wherein said second rotary body and said second rotary body transfer a sheet therebetween.

3. An apparatus according to claim 2, wherein said first rotary body comprises an impression cylinder, and said second rotary body comprises a transfer cylinder.

4. An apparatus according to claim 1, wherein
said light-projecting portion is arranged outside one of said first rotary body and said second rotary body in the axial direction, and
said light-receiving portion is arranged outside the other one of said first rotary body and said second rotary body in the axial direction.

5. An apparatus according to claim 1, wherein
said optical detector further comprises a reflection plate (24) which is arranged outside one of said first rotary body and said second rotary body in the axial direction and reflects the light from said light-projecting portion toward said light-receiving portion, and
said light-projecting portion and said light-receiving portion are arranged outside the other one of said first rotary body and said second rotary body in the axial direction.

6. An apparatus according to claim 1, wherein an optical axis of the light projected from said light-projecting portion to said light-receiving portion is set to be spaced apart from an outer surface of said first rotary body by a predetermined gap (L1) which is smaller than a size of an inserted substance.

7. An apparatus according to claim 1, wherein
an optical axis of the light projected from said light-projecting portion to said light-receiving portion is set to be spaced apart from an opposing point of said first rotary body and said second rotary body by a predetermined gap (L2) on an upstream side in a rotating direction,
the predetermined gap being set not less than a pivot length through which said first rotary body pivots since said optical detector detects a foreign substance until stopping.

8. An apparatus according to claim 1, wherein said control device actuates said optical detector when said cover detection means no longer detects the closed state of said cover.

9. An apparatus according to claim 1, further comprising an alarm device (19) which outputs an alarm when said light-receiving portion does not receive the light from said light-projecting portion.

10. An apparatus according to claim 1, wherein said control device controls said alarm device to output a foreign substance detection alarm when said light-receiving portion no longer receives the light from said light-projecting portion after said first rotary body and said second rotary body are driven.

11. An apparatus according to claim 9, wherein said control device controls said alarm device to output a sensor abnormality alarm when said light-receiving portion does not receive the light from said light-projecting portion before said first rotary body and said second rotary body are driven.
